# EUROPÄISCHE PATENTSCHRIFT

(11) **EP 0 804 797 B1**
(45) Veröffentlichungstag und Bekanntmachung des Hinweises auf die Patenterteilung: **16.09.1998**
(21) Anmeldenummer: 96900259.1
(22) Anmeldetag: 10.01.1996
(51) Int. Cl.: H01F 36/00

(54) **SUPRALEITENDER TRANSFORMATOR**
SUPERCONDUCTING TRANSFORMER
TRANSFORMATEUR SUPRACONDUCTEUR

(30) Priorität: 16.01.1995 DE 19501081
(43) Veröffentlichungstag der Anmeldung: 05.11.1997
(73) Patentinhaber: SIEMENS AKTIENGESELLSCHAFT, 80333 München (DE)
(72) Erfinder: MÜLLER, Walter, D-82449 Uffing (DE)
(86) Internationale Anmeldenummer: DE9600018
(87) Internationale Veröffentlichungsnummer: WO9622606

(56) Entgegenhaltungen:
- EP-A- 0 422 556
- CH-A- 411 124
- DE-C- 937 184
- US-A- 4 151 498

## Beschreibung

Die Erfindung betrifft einen supraleitenden Transformator mit einer Toruswicklung und ein für seine Herstellung geeignetes Wicklungselement.

Bei Transformatoren für hohe Leistungen ist zur Erzielung von geringen Gewichten und Verlusten der Einsatz von supraleitenden Materials für die Leiter der Wicklungen bekannt. Dabei werden bevorzugt eisenlose Anordnungen - also ohne Transformatorkern - verwendet. Um ein in die Umgebung des Transformators ausstrahlendes Magnetfeld aus Gründen der elektromagnetischen Verträglichkeit (EMV) zu vermeiden, wird möglichst eine Führung des Hauptfeldes in geschlossenen Flußschläuchen durch die Wicklung selbst erzwungen.

Eine bekannte Lösung hierzu ist die Toruswicklung, bei der eine günstige Führung des Hauptfeldes möglich ist. Die Toruswicklung wird dabei aus einem rohrartigen Material hergestellt. Eine derartige Toruswicklung erfordert jedoch eine aufwendige Fertigungstechnik. Darüber hinaus läßt diese Bauart keine weitere Optimierung des Bauvolumens bei einer vorgegebenen Leistung zu.

Hinsichtlich des Bauvolumens sind Spulenanordnungen, die aus einem supraleitenden Koaxialkabel gewickelt sind, z. B. der Kabeltransformator, der Toruswicklung überlegen. Diese weisen jedoch ein frei in den Raum ausstrahlendes Magnetfeld auf.

Aus der CH-PS-411 124 ist ein supraleitender Transformator bekannt, dessen Wicklungen torusförmig angeordnet sind, wobei der Querschnitt der Wicklungen kreisringförmige Gestalt aufweist. Aus der DE-PS-937 184 ist eine Schaltdrossel bekannt, die einen ringförmigen Eisenkern mit darauf angeordneten Wicklungen in Form von Scheibenspulen aufweist. Zur verbesserten Ausnutzung des vom Kern umschlossenen Ringraumes weisen die Wicklungen in ihrem Randbereich einen keilförmigen Querschnitt auf.

Der Erfindung liegt die Aufgabe zugrunde, einen supraleitenden Transformator mit einer Toruswicklung anzugeben, der besonders einfach herstellbar ist. Der Erfindung liegt die weitere Aufgabe zugrunde, ein Bauteil zur Bildung einer Toruswicklung für einen derartigen Transformator anzugeben.

Die Lösung der Aufgabe gelingt mit einem supraleitenden Transformator gemäß Anspruch 1.

Die Toruswicklung ist dadurch von einer Vielzahl von Wicklungselementen gebildet, die jeweils für sich allein einfach herstellbar sind. Für einen ringförmigen Torus wird nur eine Ausführung eines Wicklungselements benötigt. Die Herstellung der Toruswicklung des Transformators ist damit wesentlich vereinfacht gegenüber einer Ausführung nach dem Stand der Technik, wodurch sie auch kostengünstig ist.

Zur Bildung einer zumindest ovalen oder länglich gestreckten Toruswicklung können gerade zweite Wicklungselemente vorgesehen sein. Dies ist günstig, wenn von der Kreisringform abweichende Wicklungsformen gebildet werden müssen. Dies kann sich auch günstig bei einer Optimierung des erforderlichen Kesselvolumens für den Transformator auswirken.

Es ist von Vorteil, wenn die ersten Wicklungselemente jeweils im Querschnitt außer den trapez- oder keilförmigen Bereichen einen zentralen Bereich mit rechteckigem Querschnitt aufweisen und damit als zweite Wicklungselemente dienen. Die Wicklungselemente sind dann also rotationssymmetrisch. Auf diese Weise wird unabhängig von der Form des Transformators nur eine Sorte von Wicklungselement benötigt, wodurch der Aufwand für seinen Aufbau, seine Herstellung und für die Lagerhaltung der Wicklungselemente niedrig gehalten ist.

Eine weitere Optimierung in bezug auf die Baugröße ist dadurch erzielt, daß die Toruswicklung gefaltet ist. Durch das Falten, das durch die Verwendung der vorliegenden Wicklungselemente einfach möglich ist, sind kleinste Transformatorgrößen bei gleichbleibenden elektrischen Werten erzielbar.

Es ist günstig, wenn für zumindest je zwei benachbarter Wicklungselemente ein etwa sattelförmiger Schirmkörper vorgesehen ist. Dadurch kann ein Ausweichen des magnetischen Flusses aus den Zwischenräumen der Wicklungelemente vermieden werden. Die Verluste sind damit niedrig gehalten.

Die Schirmkörper sind bevorzugt aus einem eisenhaltigen und/oder supraleitenden Material gefertigt. Dadurch ist eine gute Abschirmwirkung, insbesondere unter supraleitenden Bedingungen, gegeben.

Die weitere Aufgabe wird erfindungsgemäß gelost mit einem Wicklungselement gemäß Anspruch 8. Ein derartiges Wicklungsselement ist besonders einfach, z.B. durch einfaches Wickeln von Leiter und Isolationsschichten, und preiswert herstellbar, wodurch der Aufwand für die Herstellung des Transformators niedrig gehalten ist. Derartige Wicklungselemete können dabei parallel aneinander oder unter Bildung eines Bogens segmentartig aneinandergefügt werden, da sie quasi torussektorförmig ausgebildet sind. Dadurch sind auch verschiedenste Formen für Wicklungen, insbesondere eine Nachbildung einer Torusform, realisierbar. Es ist ein gliederartiger Aufbau der Toruswicklung möglich.

Der außenliegende Röhrenleiter kann eine geringere Höhe als der innere aufweisen. Dadurch ist eine gute Ausnutzung des Querschnitts möglich, da die Leiter direkt an den Umfangsflächen des Wicklungselements plaziert werden können. Bevorzugt ist das Wicklungselement rotationssymmtrisch und damit einfach herstellbar.

Die Erfindung, weitere Vorteile und Details werden nachfolgend in Ausführungsbeispielen anhand der Zeichnung beispielhaft näher erläutert. Es zeigen:
- FIG 1: ein supraleitender Transformator mit Toruswicklung,
- FIG 2: ein erstes Wicklungselement für eine Toruswicklung gemäß FIG 1,
- FIG 3: eine Toruswicklung in gestreckter Bauweise,
- FIG 4: ein Transformator mit einer gestreckte Toruswicklung in gefalteter Ausführung in einer Seitenansicht,
- FIG 5: der Transformator gemäß FIG 4 in der Draufsicht
- FIG 6 und 7: ein Prinzipbild eines dreiphasigen Transformators mit gestreckter Toruswicklung in einer Drauf- bzw. Seitenansicht und
- FIG 8 und 9: einen dreiphasigen Transformator mit gefalteter Toruswicklung in einer Drauf- bzw. Seitenansicht.

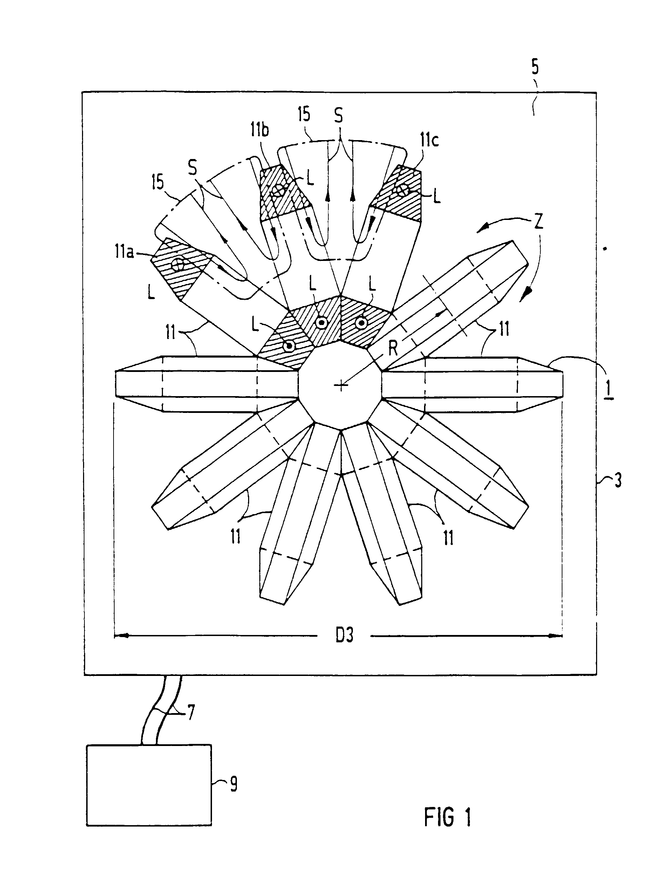

FIG 1 zeigt einen supraleitenden Transformator 1, der in einem Gehäuse 3 angeordnet ist. Die Prinzipdarstellung zeigt, daß der Innenraum 5 des Gehäuses 3 über Versorgungsleitungen 7 mit einer Kühleinrichtung 9 verbunden ist. Die Kühleinrichtung 9 kühlt das im Gehäuse 3 enthaltene Kühlmedium auf die erforderliche Tieftemperatur herab.

Der Transformator 1 weist im Prinzip eine Wicklung auf, die nach Art einer Toruswicklung, ähnlich einem geschlossenen Schlauchring, aufgebaut ist. Die Toruswicklung wird vorliegend von einer Vielzahl von ersten Wicklungselementen 11, 11a, 11b, 11c gebildet, die sektorartig aneinander gefügt sind. Sie bilden dabei eine polygonartige Anordnung.

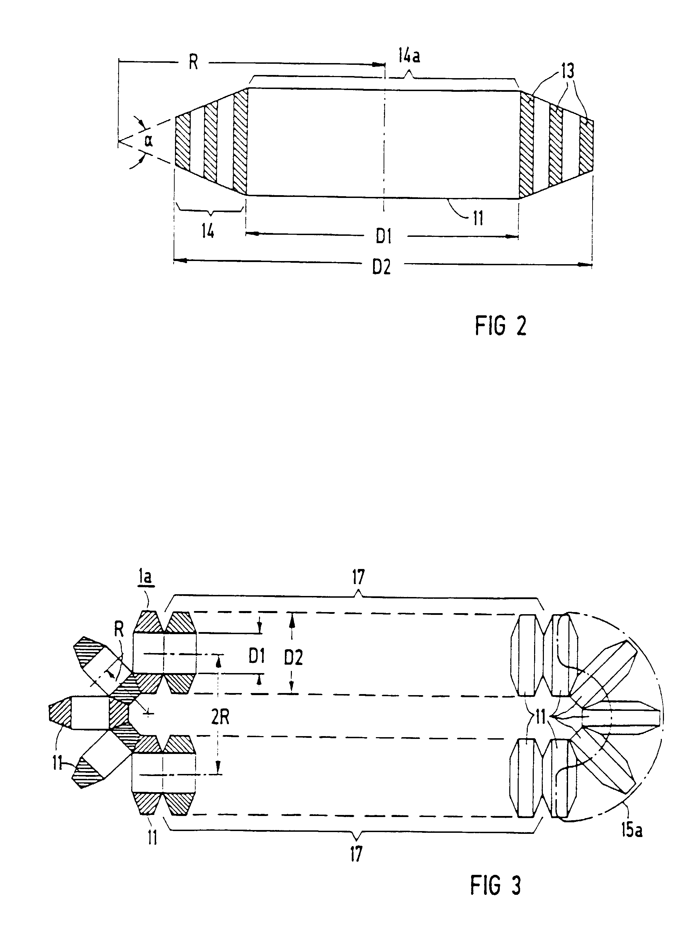

FIG 2 zeigt einen Schnitt durch ein derartiges erstes Wicklungselement 11 im Detail. Das erste Wicklungselement 11 ist zunächst ringartig mit einem inneren Durchmesser D1 und einem äußeren Durchmesser D2 aufgebaut. Je nach gewünschtem Transformatortyp sind in dem ersten Wicklungselement 11 entsprechende konzentrische Röhrenleiter 13 koaxial angeordnet, die als Leiter für die Wicklung dienen. Vorliegend ist beispielhaft das Wicklungselement 11 mit drei Röhrenleitern 13 dargestellt, die für einen Dreiwicklungstransformator oder auch eine doppelkonzentrische Anordnung eines Zweiwicklungstransformators dienen kann.

Da vorliegend ein supraleitendes Bauelement gebildet sein soll, sind die Röhrenleiter selbstverständlich aus einem supraleitenden Material, z.B. einem Hoch- oder Tieftemperaturleiter (HTL bzw. TTL), gefertigt.

Zumindest im Bereich 14 der einander anliegenden Flächen benachbarter Wicklungselemente weist das Wicklungselement 11 ein Profil mit einem keil- oder trapezförmigen Querschnitt auf. Im Gegensatz zu einem O-Ring mit kreisförmigem Querschnitt kann hier also von einem Trapez-Ring gesprochen werden.

Der entsprechende Trapezwinkel α hängt je nach der für die Toruswicklung vorgesehenen Geometrie, insbesondere dem Radius und der Anzahl von Wicklungselementen 11, ab. Bevorzugt ist das Wicklungselement 11 - wie dargestellt - rotationssymmetrisch ausgebildet, so daß beim Zusammenfügen von Wicklungselementen 11a, 11b, 11c keine besondere Lage vorgesehen werden muß. Es sind jedoch auch unsymmetrische Formen oder im Gegensatz zur Kreisringform auch eckige oder ovale Ausführungen möglich, die jedoch nicht weiter dargestellt sind.

In FIG 1 ist zu sehen, wie eine vorgegebene Anzahl, nämlich zehn, Wicklungselemente 11 bis 11c polygonartig zur einer Toruswicklung zusammengefügt sind. Um die Zwischenräume Z zwischen den Wicklungselementen 11 bis 11c möglichst klein zu halten, kann die Anzahl der ersten Wicklungselemente 11 bis 11c hoch gewählt werden. Auf diese Weise ist ein radiales Ausweichen des magnetischen Flusses zwischen den ersten Wicklungselementen 11 bis 11c vermieden. Es ist auch alternativ prinzipiell möglich, die ersten Wicklungselemente im Querschnitt völlig kreisringsektorförmig auszubilden, so daß die Zwischenräume Z nahezu völlig vermieden sind.

Zur Vermeidung des radialen Austretens des elektromagnetischen Flusses aus der Toruswicklung sind beispielhaft an den ersten Wicklungselementen 11a,11b,11c Schirmkörper 15 angeordnet (strichliert dargestellt). Die Schirmkörper 15 sind etwa sattelförmig ausgebildet und überlappen jeweils einen Zwischenraum Z zwischen zwei Wicklungselementen 11a und 11b bzw. 11b und 11c. Mit S sind die Verläufe der resultierenden Wirbelstrombahnen in den Schirmkörpern 15 bezüglich der eingezeichneten Leerlaufstromdurchflutung L in den ersten Wicklungselementen 11a bis 11c qualitativ dargestellt.

Die Schirmkörper 15 sind ebenfalls aus einem supraleitenden elektromagnetischen Material gefertigt. Sie können auch durch eine flächenhafte Belegung eines entsprechend geformten Trägermaterials mit supraleitenden Material realisiert werden.

Alternativ kann das Trägermaterial auch von linienhaften Supraleitern gebildet werden. Es ergibt sich dadurch ein skelettartiger Träger. Gegebenenfalls können die Schirmkörper 15 selbst in einer derartigen Skelettbauweise ausgeführt sein. Die einzelnen Leiter oder Drähte des Skeletts sind dann elektrisch miteinander verbunden.

Die ersten Wicklungselemente 11a bis 11c und die Schirme 15 können miteinander durch nicht näher dargestellte Befestigungsmittel, z. B. Halteelemente aus Kunststoff, miteinander befestigt oder auch auf einfache Weise miteinander verklebt sein.

Um bei größeren Leistungen, z. B. bei Leistungstransformatoren mit über 10 MVA Einphasenleistung, einen großen Polygondurchmesser D3 zu vermeiden, kann eine Ausführung eines Transformators 1a gemäß FIG 3 mit gestreckter Toruswicklung günstig sein (Darstellung ohne Gehäuse). Es kann dabei nämlich ein kleinerer Radius R gegenüber dem aus FIG 1 verwendet werden, wobei zwei Halbpolygone mit zwei geraden Abschnitten 17 miteinander verbunden sind. Die geraden Abschnitte 17 können selbstverständlich von einfachen konzentrisch angeordneten geraden Röhrenstücken gebildet sein (nicht näher dargestellt). Die geraden Abschnitte können jedoch auch unter Verwendung der neuen ersten Wicklungselemente 11 gebildet werden. Diese können nämlich im Bereich ihres inneren Durchmessers D1 - wie in FIG 2 zu sehen ist - unter Bildung einer geraden Flußröhre gerade aneinander gesetzt werden. Auf diese Weise ist die gesamte Wicklungsanordnung von einem standardmäßigen ersten Wicklungselement 11 gebildet. Der Schirmkörper 15a kann auch mehrere Wicklungselemente 11 abdecken, so daß wie hier gezeigt ein halbschalenartiger Schirm 15a gebildet ist.

Dadurch, daß die ersten Wicklungselemente 11 gerade und in Winkeln zueinander angeordnet werden können, sind beliebige Bauformen für die Wicklung eines Transformators oder einer Spule erzeugbar. Dies ist besonders günstig wenn bestimmte Baugrößen oder Bauformen eingehalten werden müssen.

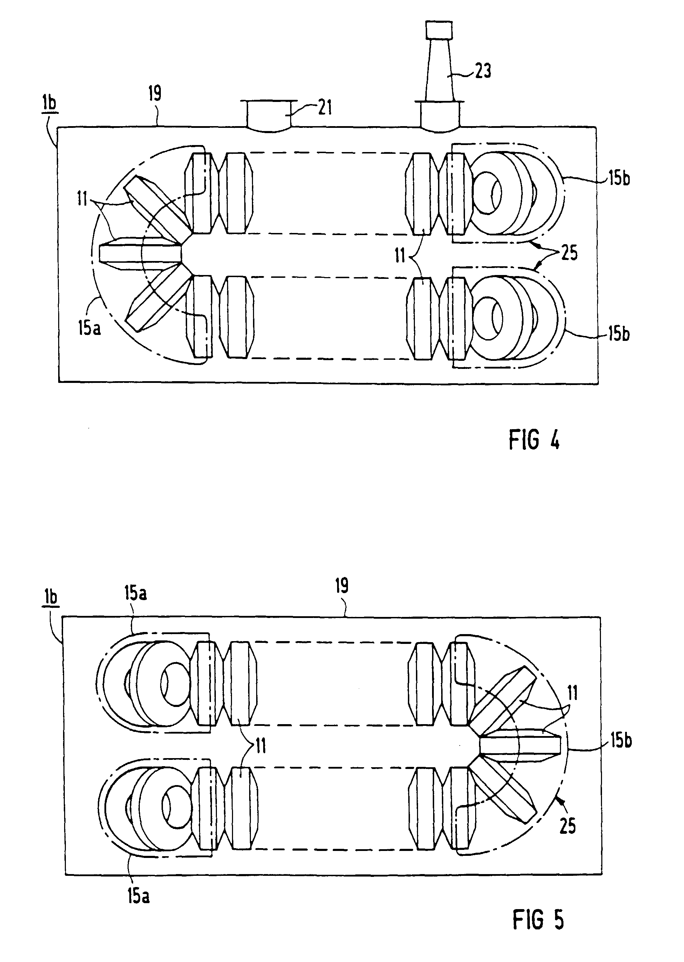

Die FIG 4 und 5 zeigen eine weitere Ausführungsform eines supraleitenden Transformators 1b, bei dem die gestreckte Wicklungsanordnung gemäß FIG 3 zusätzlich gefaltet ist. Die beiden Figuren zeigen den Kessel 19 des Transformators 1b, aer beispielhaft einen Kühlanlagenanschluß 21 und eine Hochspannungsdurchführung 23 aufweist. Diese Ausführung weist gegenüber der aus FIG 3 eine reduzierte Baulänge auf, die ohne zusätzliche Bauelemente erzielbar ist. Die Wicklungsanordnung mit den neuen Wicklungselementen 11 ist nämlich nach Art einer Gliederkette verformbar. An den zusätzlichen Knickstellen 25 sind ebenfalls bevorzugt Schirmkörper 15b zur Flußsteuerung vorgesehen.

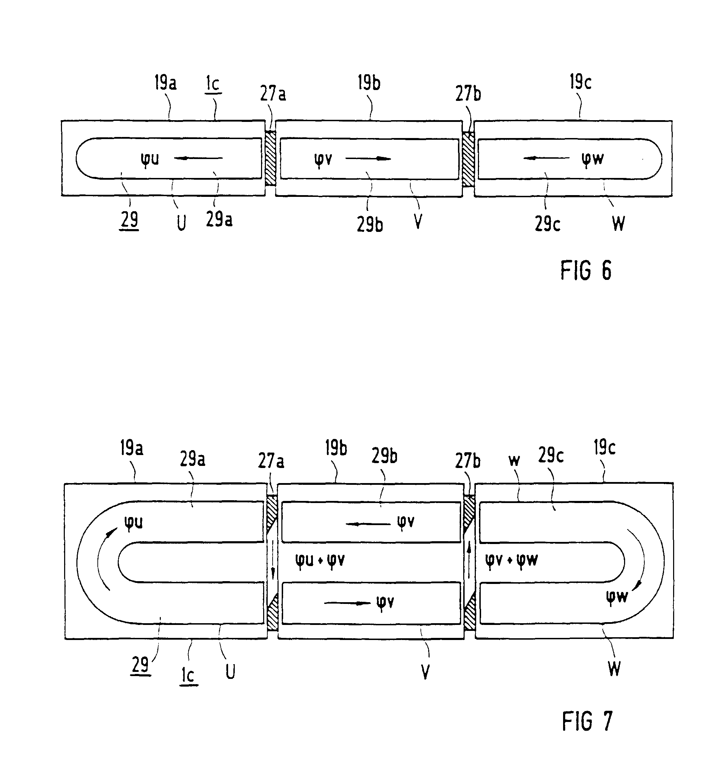

Die FIG 6, 7 und 8, 9 zeigen mehrphasige supraleitende Transformatoren 1c bzw. 1d in einer Seiten- und Draufsicht. Die Wicklung 29 ist dabei nur im Prinzip dargestellt. Es ist dabei zu erkennen, daß für alle Phasen U,V,W - hier vorliegend drei - nur eine gemeinsame Toruswicklung 29 vorgesehen ist. Sie ist in einzelne Wicklungsabschnitte 29a bis 29c für die einzelnen Phasen U,V,W unterteilt. Die Wicklungsabschnitte 29a bis 29c der Phasen U,V,W sind durch Joche 27a,27b (Figuren 6 und 7) voneinander getrennt. Die gezeigte gestreckte Toruswicklung 29 des Transformators 1c ist in diesem Ausführungsbeispiel in ihrer Streckrichtung quer unterteilt, so daß nur zwei Joche 27a,b nötig sind. Die Phase V teilt sich demnach in zwei voneinander getrennte Wicklungsabschnitte 29b auf.

Die sich ergebenden magnetischen Flüße ϕu,ϕv,ϕw sind in den Figuren eingezeichnet. Die Flußrichtung der mittleren Phase V ist den positiven Flußrichtungen der Phasen U und W entgegengesetzt gewählt, so daß durch vektorielle Addition an den Jochen 27a,27b kleinstmögliche Flüße ϕu,ϕv,ϕw entstehen.

Die Unterteilung in die Wicklungsabschnitte 29a,29b,29c dient gleichzeitig zur Aufteilung des Kessels in drei Kesselabschnitte 19a,19b,19c. Die Kesselabschnitte 19a,19b,19c sind an ihren aneinanderliegenden Flächen im Bereich der Joche 27a,27b mit nicht näher gezeigten Flanschen ( nach dem Stand der Technik) versehen, so daß einen gute mechanische und magnetische Kopplung der geweilig gebildeten Einheiten möglich ist. Ein derartiger Transformator 1c ist dadurch mehrteilig transportierbar, was insbesondere bei großen Transformatoren von Vorteil ist, da dort immer wieder Transportgröße und -gewicht ein Problem darstellen. Gegebenenfalls können die Joche 27a,27b und die Flansche vorteilhaft zu einer baulichen Einheit vereinigt sein. Die Joche 27a,27b sind aus üblichen Transformatorblech gefertigt und außerhalb zwischen den Kesselabschnitten 19a,19b,19c angeordnet, so daß sie bei normalen Umgebungstemparaturen, also etwa zwischen 0 und 100° C, betrieben werden.

Die Kesselabschnitte 19a,19b,19c können bei der vorliegenden einfachen Aufteilung der Toruswicklung 29 als Quader ausgeführt sein, wodurch sie einfach herstellbar sind. Es ist auch eine sternförmige Unterteilung des gesamten Transformators denkbar, bei der ein je nach Anzahl der Phasen sternförmig aufgeteilter zylindrischer Kessel zur Anwendung kommt.

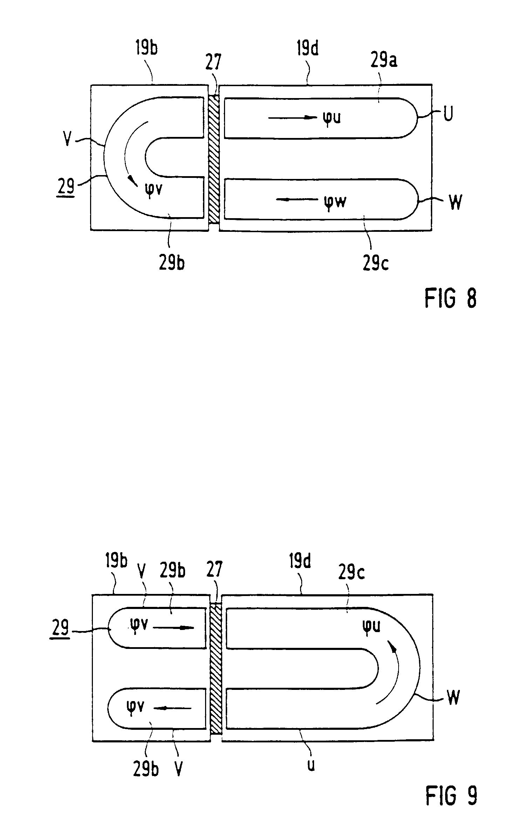

Auch diese beispielhaft dreiphasige Anordnung ist gemäß den obigen Ausführungen auch in gefalteter Ausführung herstellbar. In der gefalteten Ausführung gemäß FIG 9 kommen dabei die Wicklungsabschnitte 29a und 29c der Phasen U und W nebeneinander zu liegen. Diese können dann mit Vorteil auch in einem gemeinsamen Kesselabschnitt 19d untergebracht sein.Die Kesselform kann hier beliebig zylindrisch oder auch quaderförmig sein. Bei dieser Ausführung ist sogar nur ein gemeinsames Joch 27 erforderlich.

Selbstverständlich sind die Merkmale der einzelnen Ausführungen miteinander kombinierbar oder untereinander austauschbar, ohne daß der Grundgedanke der Erfindung verlassen wird.

## Patentansprüche

1. Transformator (1,1a,1b,1c,1d) mit einer supraleitenden Toruswicklung (29), welche von mehreren gleichen ersten Wicklungselementen (11,11a,11b,11c) mit Ringform gebildet ist, wobei die ersten Wicklungselemente (11,11a,11b,11c) ringsektorartig aneinandergereiht und jeweils zumindest im Bereich (14) ihrer aneinanderliegenden Flächen im Querschnitt ein Profil mit nach außen verjüngtem, trapez- oder keilförmigen Querschnitt aufweisen, und wobei die Wicklungselemente (11,11a,11b,11c) jeweils zumindest zwei koaxial ineinander angeordnete, gegeneinander elektrisch isolierte Röhrenleiter (13) aufweisen.

2. Supraleitender Transformator nach Anspruch 1, wobei die ersten Wicklungselemente (11,11a,11b,11c) rotationssymmetrisch sind.

3. Supraleitender Transformator nach Anspruch 1 oder 2, wobei zur Bildung einer gestreckten Ringform der Toruswicklung (29) röhrenförmige zweite Wicklungselemente vorgesehen sind, die zueinander parallele gerade Anschnitte (17) bilden.

4. Supraleitender Transformator nach Anspruch 3, wobei die zweiten Wicklungselemente an ihren Stirnflächen jeweils einen zentralen Bereich (14a) aufweisen, die parallel zueinander sind, derart, daß die zweiten Wicklungselemente in Längsrichtung unter Bildung einer Röhrenform geradlinig aneinandergereiht sind.

5. Supraleitender Transformator nach einem der Ansprüche 3 oder 4, wobei die gestreckte Ringform im Bereich der geraden Abschnitte (17) gefaltet ist, derart, daß ihre freien Enden parallel zueinander liegen.

6. Supraleitender Transformator nach einem der Ansprüche 1 bis 5, wobei für zumindest je zwei benachbarter Wicklungselemente (11,11a,11b,11c) ein etwa sattelförmiger äußerer Schirmkörper (15,15a) vorgesehen ist.

7. Supraleitender Transformator nach Anspruch 6, wobei der/die Schirmkörper (15,15a) aus einem eisenhaltigen und/oder supraleitenden Material gefertigt ist/sind.

8. Wicklungselement in Ringform zur Bildung der supraleitenden Toruswicklung (29) eines induktiven Bauteils, insbesondere eines Transformators (1,1a,1b,1c,1d), wobei die Ringform im Querschnitt ein Profil mit nach außen verjüngtem, trapez- oder keilförmigen Querschnitt aufweist, und wobei zumindest zwei koaxial ineinander angeordnete, gegeneinander elektrisch isolierte Röhrenleiter (13) vorgesehen sind.

9. Wicklungselement nach Anspruch 8, wobei die Ringform rotationssymmetrisch ist.

10. Wicklungselement nach Anspruch 9, wobei der äußere Röhrenleiter (13) eine geringere Höhe als der innere aufweist.

## Claims

1. Transformer (1,1a,1b,1c,1d) having a superconductive toroidal winding (29) which is formed by a plurality of identical first winding elements (1,11a,11b,11c) having an annular shape, the first winding elements (11,11a,11b,11c) being arranged in a row like an annular sector and in each case having, at least in the region (14) of their surfaces which are in contact with one another a profile, in cross section, having an outwardly tapering, trapezoidal or wedge-shaped cross section, and the winding elements (11,11a,11b,11c) each having at least two tubular conductors (13) which are arranged coaxially one inside the other and are electrically insulated from one another.

2. Superconductive transformer according to Claim 1, the first winding elements (11,11a,11b,11c) being rotationally symmetrical.

3. Superconductive transformer according to Claim 1 or 2, tubular second winding elements, which form straight sections (17) parallel to one another, being provided in order to form an elongated annular shape for the toroidal winding (29).

4. Superconductive transformer according to Claim 3, the second winding elements each having on their end surfaces a central region (14a), which central regions are parallel to one another, in such a manner that the second winding elements are arranged in a row in a straight line in the longitudinal direction, forming a tubular shape.

5. Superconductive transformer according to one of Claims 3 or 4, the extended annular shape being folded in the region of the straight sections (17), in such a manner that their free ends are parallel to one another.

6. Superconductive transformer according to one of Claims 1 to 5, an outer screening body (15, 15a) which is roughly in the shape of a saddle being provided for at least in each case two adjacent winding elements (11,11a,11b,11c).

7. Superconductive transformer according to Claim 6, the screening body or bodies (15,15a) being manufactured from a material which contains iron and/or is superconductive.

8. Winding element having an annular shape in order to form the superconductive toroidal winding (29) of an inductive component, in particular of a transformer (1,1a,1b,1c,1d), the annular shape having a profile, in cross section, having an outwardly tapering, trapezoidal or wedge-shaped cross section and at least two tubular conductors (13) being provided which are arranged coaxially one inside the other and are electrically insulated from one another.

9. Winding element according to Claim 8, the annular shape being rotationally symmetrical.

10. Winding element according to Claim 9, the outer tubular conductor (13) having a smaller height than the inner conductor.

## Revendications

1. Transformateur (1,1a,1b,1c,1d) comportant un enroulement (29) torique supraconducteur qui est formé par plusieurs premiers éléments (11,11a,11b,11c) d'enroulement identiques en forme d'anneaux, les premiers éléments (11,11a,11b,11c) d'enroulement étant assemblés à la façon de secteurs d'anneaux et comportant chacun, au moins dans la zone (14) de leur surfaces contiguës, en section transversale, un profil de section transversal rétréci vers l'extérieur, trapézoïdal ou cunéiforme, et les éléments (11,11a,11b,11c) d'enroulement comportant au moins deux conducteurs (13) tubulaires montés coaxialement l'un dans l'autre et isolés l'un de l'autre du point de vue électrique.

2. Transformateur supraconducteur suivant la revendication 1, les premiers éléments (11,11a,11b,11c) d'enroulement étant symétriques de révolution.

3. Transformateur supraconducteur suivant la revendication 1 ou 2. des deuxième éléments d'enroulement tubulaires qui forment des tronçons (17) droits parallèles les uns aux autres étant prévus pour former une forme en anneau allongée de l'enroulement (29) torique.

4. Transformateur supraconducteur suivant la revendication 3. les deuxième éléments d'enroulement comportant sur leur surfaces frontales chacun une zone (14a) centrale, les zones centrales étant parallèles les unes aux autres de telle manière que les deuxième éléments d'enroulement sont alignés de manière rectiligne dans la direction longitudinale en formant une forme tubulaire.

5. Transformateur supraconducteur suivant l'une des revendications 3 ou 4, la forme en anneaux allongée étant pliée dans la zone des tronçons (17) droits de telle manière que ses extrémités libres sont parallèles l'une à l'autre.

6. Transformateur supraconducteur suivant l'une des revendications 1 à 5, un élément (15,15a) de blindage extérieur à-peu-près en forme de selle étant prévu pour au moins chaque groupe de deux éléments (11,11a, 11b, 11c) d'enroulement voisins.

7. Transformateur supraconducteur suivant la revendication 6. l'élément ou les éléments (15,15a) de blindage étant en un matériau à teneur en fer et/ou supraconducteur.

8. Elément d'enroulement de forme annulaire servant à former l'enroulement (29) torique supraconducteur d'une pièce inductive. notamment d'un transformateur (1,1a,1b,1c,1d), la forme annulaire ayant en section transversale un profil à section transversale rétrécie vers l'extérieur, trapézoïdal ou cunéiforme, et au moins deux conducteurs (13) tubulaires montés coaxialement l'un dans l'autre et isolés l'un de l'autre du point de vue électrique étant prévus.

9. Elément d'enroulement suivant la revendication 8. la forme annulaire étant symétrique de révolution.

10. Elément d'enroulement suivant la revendication 9, le conducteur (13) tubulaire extérieur ayant une hauteur inférieure au conducteur tubulaire intérieur.
